# EUROPÄISCHE PATENTANMELDUNG

(11) **EP 3 549 502 A1**
(43) Veröffentlichungstag der Anmeldung: **09.10.2019**
(21) Anmeldenummer: 19167528.9
(22) Anmeldetag: 05.04.2019
(51) Int. Cl.: A47L 5/36, A47L 5/38, A47L 7/00, A47L 9/24, B60S 3/00

(54) **REINIGUNGSROBOTER**

(30) Priorität: 06.04.2018 DE 102018108177
(71) Anmelder: Feil, Bernd, 84529 Tittmoning (DE)
(72) Erfinder: Feil, Bernd, 84529 Tittmoning (DE)
(74) Vertreter: Warneke, Nicola

(57) **Zusammenfassung**

Reinigungsroboter (10 / 30) für ein Fahrzeug, mit einer Saugeinheit (14) zum Aufsaugen von Partikeln, einer Rückhalteeinheit (12), die in dem Fahrzeug befestigbar ist, zum Aufnehmen aufgesaugter Partikel, und mit einer Steuereinheit (11) zum Steuern des Reinigungsroboters, wobei die Saugeinheit mit der Rückhalteeinheit über eine Saugleitung derart verbunden ist, dass von der Saugeinheit aufgesaugte Partikel in die Rückhalteeinheit gelangen, und wobei der Saugroboter mit einem Energiespeicher in dem Fahrzeug verbindbar ist.

Verfahren zum Reinigen eines Fahrzeugs mittels eines Reinigungsroboters.

## Beschreibung

### GEBIET DER ERFINDUNG

Die vorliegende Erfindung betrifft einen Reinigungsroboter sowie ein Verfahren zum Reinigen eines Fahrzeugs.

### TECHNISCHER HINTERGRUND

US 2002/01212191 zeigt einen Reinigungsroboter zum Reinigen eines Fahrzeugs. Allerdings ist der Roboter nicht Teil des Fahrzeugs, sodass ein Fahrzeuglenker den Reinigungsroboter aufsuchen muss.

Dies ist ein Zustand, den es zu verbessern gilt.

### ZUSAMMENFASSUNG DER ERFINDUNG

Vor diesem Hintergrund liegt der vorliegenden Erfindung die Aufgabe zugrunde, einen fahrzeugmontierbaren Roboter anzugeben.

Erfindungsgemäß wird diese Aufgabe durch einen Reinigungsroboter mit den Merkmalen des Patentanspruchs 1 und/oder durch ein Verfahren zum Reinigen eines Fahrzeugs mit den Merkmalen des Patentanspruches 11 gelöst.

Demgemäß ist vorgesehen:
- ein Reinigungsroboter für ein Fahrzeug mit einer Saugeinheit zum Aufsaugen von Partikeln, einer Rückhalteeinheit, die in einem Fahrzeug befestigbar ist, zum Aufnehmen aufgesaugter Partikel, einem Antrieb zum Bewegen der Saugeinheit und mit einer Steuereinheit zum Steuern des Reinigungsroboters, wobei die Saugeinheit mit der Rückhalteeinheit über eine Saugleitung derart verbunden ist, dass von der Saugeinheit aufgesaugte Partikel in die Rückhalteeinheit gelangen, und wobei der Reinigungsroboter mit einem Energiespeicher in einem Fahrzeug verbindbar ist; sowie
- ein Verfahren zum Reinigen eines Fahrzeugs mittels eines Reinigungsroboters mit den folgenden Schritten: Auslösen eines Reinigungsbefehls; Identifizieren einer Gelegenheit zum Ausführen des Reinigungsbefehls, wenn festgestellt wird, dass sich gerade keine Insassen in dem Fahrzeug befinden; Ausführen des Reinigungsbefehls, indem eine Saugeinheit derart gesteuert wird, dass ein Innenraum des Fahrzeugs mittels einer Saugeinheit abgesaugt wird, wenn eine Gelegenheit zum Ausführen des Reinigungsbefehls gegeben ist.

Der Erfindung liegt die Aufgabe zugrunde, einen Reinigungsroboter für ein Fahrzeug zu schaffen, der das Fahrzeug autonom reinigt. Dementsprechend ist vorgesehen, dass der Reinigungsroboter in einem Fahrzeug befestigbar ist.

Der Erfindung liegt ferner die Aufgabe zugrunde, ein Verfahren zum Reinigen eines Fahrzeugs zu schaffen, mittels welchem das Fahrzeug autonom gereinigt werden kann, ohne dass ein Insasse in dem Fahrzeug von der Reinigung gestört wird.

Vorteilhafte Ausgestaltungen und Weiterbildungen ergeben sich aus den weiteren Unteransprüchen sowie aus der Beschreibung unter Bezugnahme auf die Figuren der Zeichnung.

Gemäß einer bevorzugten Weiterbildung der Erfindung ist die Steuereinheit eingerichtet, eine Bewegung der Saugeinheit in einem vorbestimmten Bereich eines Innenraums eines Fahrzeugs, insbesondere eines Fußraums oder eines Kofferraums, zu steuern. Dementsprechend kann vorgesehen sein, dass der Reinigungsroboter Begrenzungen des vorbestimmten Bereichs des Innenraums erkennt oder dass Begrenzungen des vorbestimmten Bereichs des Innenraums in einem Datenspeicher des Reinigungsroboters gespeichert sind.

Dementsprechend kann vorgesehen sein, dass ein Reinigungsroboter einen Fußraum eines Fahrzeugs reinigt, sofern der Reinigungsroboter erkennt, dass das Fahrzeug gerade nicht benutzt wird.

Somit lässt sich einrichten, dass ein Fahrzeuglenker stets ein ausgesagtes Fahrzeug bzw. einen ausgesaugten Fußraum und/oder einen ausgesaugten Kofferraum vorfindet, ohne dass sich ein Fahrzeuglenker oder ein Fahrzeughalter mit der Reinigung des Fahrzeugs befassen muss.

Gemäß einer bevorzugten Weiterbildung der Erfindung ist die Steuereinheit eingerichtet, den Reinigungsroboter zu starten, wenn das Fahrzeug nicht in Betrieb ist. Dies steigert den Komfort eines Nutzers des Fahrzeugs in dem Fahrzeug. Insbesondere kann vorgesehen sein, dass die Steuereinrichtung erkennt, ob sich ein Fahrzeuginsasse in dem Fahrzeug befindet und dieser möglicherweise durch Geräusche des Reinigungsroboters gestört werden würde. Dies lässt sich beispielsweise mittels einer Insassenerkennung, die oft in Fahrzeugsitzen verbaut ist, um Insassen an das Anschnallen zu erinnern, gewährleisten.

Gemäß einer bevorzugten Weiterbildung der Erfindung ist der Reinigungsroboter mit einem Eingabemittel für einen Benutzer verwendbar, wobei der Reinigungsroboter mittels des Eingabemittels betätigbar ist. Das Eingabemittel kann als Spracheingabemittel, als Taste oder als Touchpad ausgebildet sein. Ferner kann vorgesehen sein, dass das Eingabemittel Teil eines Fahrzeugschlüssels ist. Dementsprechend kann vorgesehen sein, dass ein Benutzer einen Reinigungsbefehl an den Reinigungsroboter zum Saugen des Fahrzeugs erteilt. Alternativ kann vorgesehen sein, dass der Reinigungsroboter anderweitig aktiviert wird, wenn erkannt wird, dass gerade ein günstiger Zeitpunkt zum Reinigen des Fahrzeugs vorliegt.

Gemäß einer bevorzugten Weiterbildung der Erfindung ist der Reinigungsroboter mit einer Kamera verbindbar und die Kamera ist eingerichtet, eine Bildaufnahme von dem Innenraum des Fahrzeugs zu erstellen, wobei die Steuereinheit eingerichtet ist, die Bildaufnahme auszuwerten und den Reinigungsroboter aufgrund der Bildaufnahme zu steuern.

Dementsprechend kann vorgesehen sein, dass eine Bildaufnahme des Innenraums erstellt wird, wenn die Lichtverhältnisse hierfür günstig sind und/oder wenn ein günstiger Zeitraum zum Reinigen des Fahrzeugs erkannt wird. Ergibt die Auswertung der Bildaufnahme, dass das Fahrzeug nicht, kaum oder mäßig von Partikeln verunreinigt ist, kann vorgesehen sein, dass eine Reinigung des Fahrzeugs verschoben wird. Ergibt eine Auswertung der Bildaufnahme hingegen, dass das Fahrzeug mit Partikeln verunreinigt ist, kann vorgesehen sein, dass eine Fahrzeugreinigung zum nächsten möglichen Zeitraum veranlasst wird.

Ferner kann die Bildaufnahme dahingehend ausgewertet werden, ob der Bereich des Innenraums des Fahrzeugs frei von Gebrauchsgegenständen ist, die möglicherweise bei der Reinigung beschädigt werden würden oder aufgesaugt werden würden.

Somit lässt sich beispielsweise verhindern, dass die Saugeinheit von losen Gegenständen, beispielsweise Kleidungsstücken, blockiert wird.

Gemäß einer bevorzugten Weiterbildung der Erfindung ist die Saugleitung als Gelenkarm ausgebildet, wobei eine Beweglichkeit des Gelenkarms hinsichtlich der Abmessungen des vorbestimmten Bereichs des Innenraums des Fahrzeugs ausgelegt ist. Dementsprechend kann die Saugleitung hinsichtlich einer Anzahl an Gelenken und/oder hinsichtlich ein- und aus fahrbaren Abschnitten des Gelenkarms derart ausgelegt sein, dass der gesamte vorbestimmte Bereich des Innenraums von der Saugeinheit erreicht werden kann. Somit ist sichergestellt, dass sich in Ecken eines Innenraums keine Partikel sammeln. Gemäß einer bevorzugten Weiterbildung der Erfindung ist die Saugleitung als Schlauch ausgebildet und die Saugeinheit weist einen Antrieb auf. Ein Schlauch ist eine flexible Leitung, die sich mit einem Biegeradius biegen lässt. Dementsprechend kann der gesamte Bereich eines Innenraums von einer Saugeinheit, die an einem ausreichend langen Schlauch angeschlossen ist, erreicht werden.

Gemäß einer bevorzugten Weiterbildung der Erfindung ist die Rückhalteeinheit ein werkzeuglos entnehmbares Schubfach und/oder weist einen werkzeuglos entnehmbaren Beutel auf. Vorzugsweise ist ein entnehmbaren Schubfach von einem Rastmittel derart gesichert, dass sich das Schubfach während einer Fahrt eines Fahrzeugs nicht lösen kann.

Gemäß einer bevorzugten Weiterbildung der Erfindung ist der Reinigungsroboter mit einem Energiespeicher verbindbar, wobei der Reinigungsroboter während einer Fahrt des Fahrzeugs geladen wird. Dementsprechend kann vorgesehen sein, dass der Reinigungsroboter über ein Bordnetz des Fahrzeugs mit einer Fahrzeugbatterie oder mit einem Fahrzeugakku verbunden ist.

Gemäß einer bevorzugten Weiterbildung der Erfindung ist die Saugeinheit in einen ersten Zustand bringbar, in welchem die Saugeinheit beweglich ist. Ferner ist die Saugeinheit in einen zweiten Zustand bringbar, in welchem die Saugeinheit gegen während einer Fahrt auftretende Kräfte gesichert ist.

Somit wird die Fahrzeugsicherheit während der Fahrt nicht von dem Reinigungsroboter beeinträchtigt.

Gemäß einer bevorzugten Weiterbildung der Erfindung ist der Reinigungsroboter in dem ersten Zustand unter einem Fahrzeug Sitz befestigt. Somit ist der Reinigungsroboter während der Fahrt bereits nach oben und unten, also in Richtung der Gewichtskraft und in eine zu der Gewichtskraft entgegengesetzten Richtung, gesichert. Ferner hat die Saugeinheit zum Reinigen eines Fußraums einen geringen Weg zurückzulegen, wenn der Reinigungsroboter unter dem Fahrzeugsitz angeordnet ist. Dies verkürzt die Länge der Saugleitung und gewährleistet somit eine kompakte Bauform des Reinigungsroboters.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

### INHALTSANGABE DER ZEICHNUNG

Die vorliegende Erfindung wird nachfolgend anhand der in den schematischen Figuren der Zeichnung angegebenen Ausführungsbeispiele näher erläutert. Es zeigen dabei:
- Fig. 1: zeigt eine schematische Schnittsicht eines Reinigungsroboters gemäß einer Ausführungsform der Erfindung;
- Fig. 2: zeigt eine schematische Schnittsicht eines Reinigungsroboters gemäß einer Ausführungsform der Erfindung;

Die beiliegenden Figuren der Zeichnung sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnung sind gleiche, funktionsgleiche und gleich wirkende Elemente, Merkmale und Komponenten - sofern nichts anderes ausgeführt ist - jeweils mit denselben Bezugszeichen versehen.

Im Folgenden werden die Figuren zusammenhängend und übergreifend beschrieben.

### BESCHREIBUNG VON AUSFÜHRUNGSBEISPIELEN

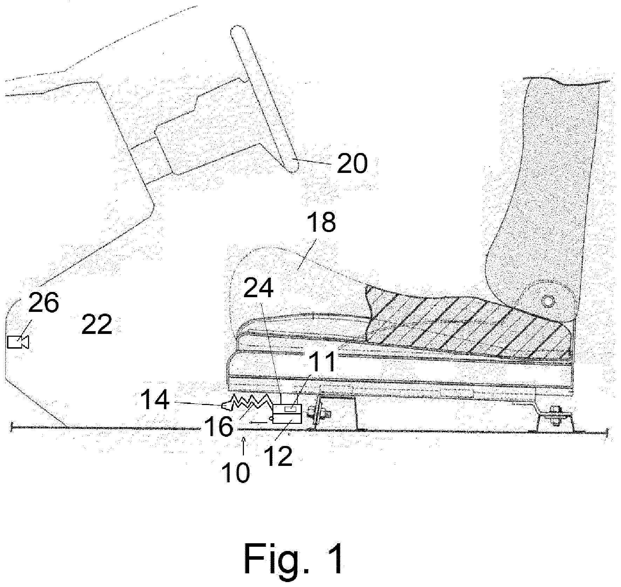

Die Figur 1 zeigt einen Innenraum eines PKWs mit einem Lenkrad 20 und einem Fahrzeugsitz 18 für einen Fahrzeuglenker. Unter dem Fahrzeugsitz ist ein Reinigungsroboter 10 an der Unterseite des Fahrzeugsitz 18 mittels einem Befestigungsmittel 24 befestigt.

Der Reinigungsroboter 10 weist eine Steuereinheit 11, eine Rückhalteeinheit 12, eine Saugleitung 16 sowie eine Saugeinheit 14 auf. Die Saugleitung 16 ist in einem Betriebszustand derart ausziehbar, dass die Saugeinheit 14 den gesamten Fußraum 22 absaugen kann. In einem Ruhezustand befindet sich die Saugleitung 16 gemäß Figur 1 zusammengefaltet unter dem Fahrzeugsitz 18, derart dass sie einen Fahrzeuglenker nicht behindert. Die Sauleitung 16 wird über einen Antrieb (nicht dargestellt) bewegt.

Das Lenkrad 20 ist ein Multifunktionslenkrad und bildet ein Eingabemittel des Reinigungsroboters 10. Dementsprechend kann ein Fahrzeuglenker über eine Taste des Lenkrads 20 einen Befehl zum Aussaugen des Fahrzeuginnenraums abgeben, sobald die Steuereinheit 11 des Reinigungsroboters erkennt, dass sich kein Insasse in dem Fahrzeug befindet.

Der Reinigungsroboter 10 ist mit einem Akku des Fahrzeugs verbunden, der während der Fahrt des Fahrzeugs geladen wird. Der Akku liefert den erforderlichen Strom zum Betreiben des Reinigungsroboters 10.

Zwischen der Steuereinheit 11 und einer Kamera 26, die eingerichtet ist, Bildaufnahmen von dem Fußraum 22 zu erstellen, besteht eine Datenverbindung. Somit lassen sich Bilddaten von der Kamera 26 auf die Steuereinheit 11 übertragen. Somit lässt sich mittels der Auswertung von Bilddaten, die nach einem Reinigungsvorgang erstellt werden, überprüfen, ob die Reinigung zufriedenstellend war.

Die Fahrzeugsitze des Fahrzeugs gemäß Figur 1 weisen eine Erkennungseinrichtung auf, die eingerichtet ist, zu erkennen, ob sich ein Insasse auf einem Fahrzeugsitz des Fahrzeugs befindet. Die Erkennungseinrichtung ist eingerichtet, Insassen an das Anschnallen zu erinnern sowie Informationen über Insassen in dem Fahrzeug an die Steuereinheit 11 zu übertragen. Somit ist sichergestellt, dass der Reinigungsroboter 10 nicht startet, während sich eine Person in dem Fahrzeug befindet.

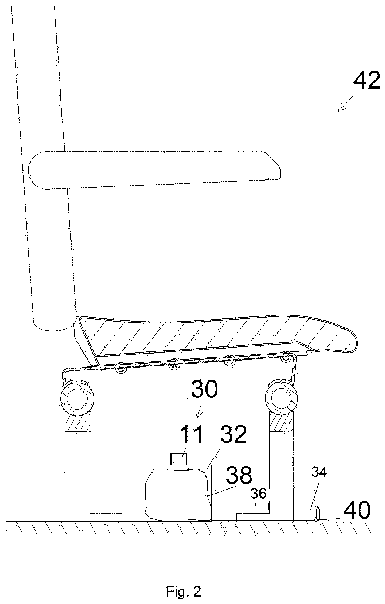

Figur 2 zeigt einen Reinigungsroboter 30 für den Innenraum eines Zugs. Der Reinigungsroboter 30 weist eine Steuereinheit 11, eine Rückhalteeinheit 32 mit einem Beutel 38, eine Saugleitung 36 und eine Saugeinheit 34 mit einem Antrieb 40 auf. Die Saugleitung 36 ist als flexibler Schlauch ausgebildet. Um die Saugeinheit 34 am Ende des Schlauchs zu bewegen weist der Schlauch an der Saugeinheit 34 einen Antrieb 40 mit mehreren Rollen auf.

Der Befehl zum Reinigen des Innenraums des Zugs kann mittels eines Eingabemittels (nicht dargestellt), welches als zentrale Taste in dem Zug ausgebildet ist, erteilt werden. Die Rückhalteeinheit 32 ist von einem Gehäuse umschlossen. Das Gehäuse lässt sich öffnen, um den Beutel 38 zu wechseln bzw. zu leeren.

Obwohl die vorliegende Erfindung anhand bevorzugter Ausführungsbeispiele vorstehend vollständig beschrieben wurde, ist sie darauf nicht beschränkt, sondern auf vielfältige Art und Weise modifizierbar.

### Bezugszeichenliste

- 10: Reinigungsroboter
- 12: Rückhalteeinheit
- 14: Saugeinheit
- 16: Saugleitung
- 18: Fahrzeugsitz
- 20: Lenkrad
- 22: Fußraum
- 24: Befestigungsmittel
- 26: Kamera

- 30: Reinigungsroboter
- 32: Rückhalteeinheit
- 34: Saugeinheit
- 36: Saugleitung
- 38: Beutel
- 40: Antrieb

## Patentansprüche

1. Reinigungsroboter (10; 30) für ein Fahrzeug mit einer Saugeinheit (14) zum Aufsaugen von Partikeln,
einer Rückhalteeinheit (12), die in einem Fahrzeug befestigbar ist, zum Aufnehmen aufgesaugter Partikel
einem Antrieb (40) zum Bewegen der Saugeinheit und mit
einer Steuereinheit (11) zum Steuern des Reinigungsroboters,
wobei die Saugeinheit mit der Rückhalteeinheit über eine Saugleitung (16) derart verbunden ist, dass von der Saugeinheit aufgesaugte Partikel in die Rückhalteeinheit gelangen, und wobei der Reinigungsroboter mit einem Energiespeicher in dem Fahrzeug verbindbar ist.

2. Reinigungsroboter nach Anspruch 1, wobei die Steuereinheit eingerichtet ist, eine Bewegung der Saugeinheit in einem vorbestimmten Bereich eines Innenraums eines Fahrzeugs, insbesondere eines Fußraums (22) oder eines Kofferraums, zu steuern.

3. Reinigungsroboter nach einem der vorstehenden Ansprüche, wobei die Steuereinheit eingerichtet ist, den Reinigungsroboter zu starten, wenn das Fahrzeug nicht in Betrieb ist.

4. Reinigungsroboter nach einem der vorstehenden Ansprüche, welcher mit einem Eingabemittel für einen Benutzer verbindbar ist, wobei der Reinigungsroboter mittels dem Eingabemittel betätigbar ist.

5. Reinigungsroboter nach einem der vorstehenden Ansprüche, welcher mit einer Kamera (26) verbindbar ist und die Kamera eingerichtet ist, eine Bildaufnahme von dem Innenraum des Fahrzeugs zu erstellen, wobei die Steuereinheit eingerichtet ist, die Bildaufnahme auszuwerten und den Reinigungsroboter aufgrund der Bildaufnahme zu steuern.

6. Reinigungsroboter nach einem der vorstehenden Ansprüche, wobei die Saugleitung als Gelenkarm ausgebildet ist, wobei eine Beweglichkeit des Gelenkarms hinsichtlich der Abmessungen des vorbestimmten Bereichs des Innenraums des Fahrzeugs ausgelegt ist.

7. Reinigungsroboter nach einem der vorstehenden Ansprüche, wobei die Saugleitung als Schlauch ausgebildet ist und Saugeinheit den Antrieb aufweist.

8. Reinigungsroboter nach einem der vorstehenden Ansprüche, wobei die Rückhalteeinheit ein werkzeuglos entnehmbares Schubfach und/oder einen entnehmbaren Beutel aufweist.

9. Reinigungsroboter nach einem der vorstehenden Ansprüche, welcher mit einem Energiespeicher verbindbar ist, der während einer Fahrt des Fahrzeugs geladen wird.

10. Reinigungsroboter nach einem der vorstehenden Ansprüche, wobei die Saugeinheit in einen ersten Zustand bringbar ist, in welchem die Saugeinheit beweglich ist, und die Saugeinheit in einen zweiten Zustand bringbar ist, in welchem die Saugeinheit gegen während einer Fahrt auftretende Kräfte gesichert ist.

11. Verfahren zum Reinigen eines Fahrzeugs mittels eines Reinigungsroboters mit den folgenden Schritten:
- Auslösen eines Reinigungsbefehls;
- Identifizieren einer Gelegenheit zum Ausführen des Reinigungsbefehls, wenn festgestellt wird, dass sich gerade keine Insassen in dem Fahrzeug befinden;
- Ausführen des Reinigungsbefehls, indem eine Saugeinheit derart gesteuert wird, dass ein Innenraum des Fahrzeugs mittels einer Saugeinheit abgesaugt wird, wenn eine Gelegenheit zum Ausführen des Reinigungsbefehls gegeben ist.

12. Verfahren nach Anspruch 11, wobei das Verfahren ferner wenigstens einen der folgenden Schritte aufweist:
- Ermitteln eines Ladezustands eines Energiespeichers des Fahrzeugs, welcher mit einem Reinigungsroboter verbunden ist;
- Feststellen, ob der Ladezustand über einem festgelegten Schwellwert liegt;
- Verwerfen des Reinigungsbefehls, wenn der Ladezustand unter dem festgelegten Schwellwert liegt;
- Rückführen der Saugeinheit in eine Ausgangsposition, in der die Saugeinheit gegen während einer Fahrt auftretende Kräfte gesichert ist;
- Aufnehmen von Bilddaten mittels einer Kamera mittels welchen der Reinigungsroboter gesteuert wird.

13. Fahrzeug, insbesondere ein bodengebundenes Fahrzeug oder ein Luftfahrzeug mit einem Reinigungsroboter nach einem der vorstehenden Ansprüche 1 bis 10.

14. Computerprogrammprodukt mit Programmcode-Mitteln, um ein Verfahren gemäß einem der vorstehenden Ansprüche durchzuführen.
